**Europäisches Patentamt**

(19) **European Patent Office**

**Office européen des brevets**

(11) Publication number: **0 246 697 B1**

(12) **EUROPEAN PATENT SPECIFICATION**

(45) Date of publication of patent specification :
25.09.91 Bulletin 91/39

(51) Int. Cl.⁵ : **A01D 45/22**

(21) Application number : 87200877.6

(22) Date of filing : 13.05.87

(54) **Device for picking pulse crops.**

(30) Priority : 16.05.86 NL 8601248

(43) Date of publication of application :
25.11.87 Bulletin 87/48

(45) Publication of the grant of the patent :
25.09.91 Bulletin 91/39

(84) Designated Contracting States :
AT BE CH DE ES FR GB GR IT LI LU NL SE

(56) References cited :
DE-A- 1 482 125
DE-A- 3 240 423
FR-A- 2 404 386
NL-A- 8 103 459
NL-A- 8 104 045

(73) Proprietor : **Mali-Ploeger B.V.**
**P.O. Box 149**
**NL-4730 AC Oudenbosch (NL)**

(72) Inventor : **van de Brand, Antonius Maria**
**Wernhoutseweg 123**
**NL-4884 AT Wernhout (NL)**

(74) Representative : **Noz, Franciscus Xaverius, Ir.**
**et al**
**Boschdijk 155**
**NL-5612 HB Eindhoven (NL)**

## Description

The invention relates to a device for picking pulse crops provided with a frame, with a picking drum provided with teeth, supported by the frame and being rotatable about an at least substantially horizontal axis of rotation extending transverse to the intended direction of movement during operation and with a guide plate co-operating therewith and extending around and at a distance from the said drum and with means for creating a flow of air towards the drum.

When using such a device besides the pulse crops also leaves and sprigs and the like are pulled off the bushes and transported further to the cleaning mechanisms arranged in the device. The capacity of said cleaning mechanisms has to be large in order to be able to achieve an effective removal of undesired elements, such as foliage and the like from the picked pulse crops, such as bush beans.

NL-A-8103459 describes in accordance with the prior art portion of claim 1 a device for pickung pulse crops wherein the teeth move around a screen shielded over an angle of about 160°. The interior of said screen is in communication with a fan so that there can be generated a vacuum in the interior of the screen. So air will be sucked into the interior of the screen at the front side and the top of the drum.

According to the invention said means for creating a flow of air co-operate with guide means provided above and extending along the upper side of the drum and which means guide the flow of air in a downward direction through the drum towards the ground.

By applying this construction it can be effected in a simple manner that already at the drum a larger quantity of the impurities being lighter than the pulse crops, such a foliage, is blown off and will be discharged through the drum towards the ground before the pulse crops and the possible remainder of the impurities are supplied to any further cleaning device(s) accommodated in the device. When using this construction according to the invention the cleaning action of the device can be improved considerably in a very simple manner.

Preferably the frame supporting the drum has been coupled to the front of a vehicle and extends a retracting belt supported by the frame obliquely upwardly from its lower end located near the circumference of the drum, whereby the frame is supported during operation by supporting means which are vertically adjustable relative to the frame and the frame is adjustable relative to the vehicle about a pivot axis extending transversely to the intended direction of movement.

Thereby the vertical position of the picking drum as well as the inclination of the retracting belt, can be optimally adjusted, dependent on the nature of the crop to be processed, such as e.g. the height of the bushes.

Further the frame supporting the drum can be provided with a pair of rearwardly extending frame parts, freely butting with their rear ends against parts of the chassis of the vehicle, whilst at some distance above the rearwardly extending beams the frame is coupled, by means of a pin joint or a ball and hook joint, to a setting cilinder coupled to the chassis of the vehicle.

By using this construction the frame supporting the picking drum can be coupled easily and quickly to the chassis of the vehicle or uncoupled from said chassis respectively.

Preferred features of the invention are set out in the dependent claims.

The invention will be further explained hereinafter with reference to a possible embodiment of the construction according to the invention diagrammaticaly illustrated in the accompanying figures.

Fig. 1 diagrammatically illustrates, partly in side view and partly in section, an embodiment of the vehicle part of a bean picking machine according to the invention.

Fig. 2 illustrates on a larger scale a part of a belt conveyor which can be coupled to the vehicle illustrated in fig. 1 and a picking drum co-operating therewith.

Fig. 3 illustrates a detail of the vehicle illustrated in fig.1.

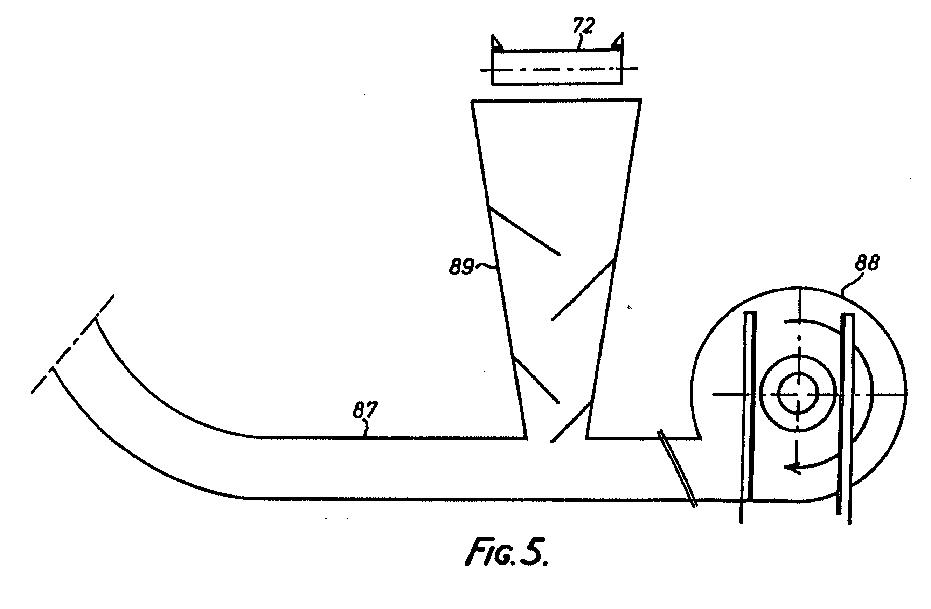

Fig. 4 illustrates a part of the hydraulic regulating circuit of the vehicle for keeping the picking element floating.

Fig. 5 illustrates an other embodiment for carrying up the crop to a bunker provided on the vehicle.

Fig 6 is a diagrammatic section of a further embodiment of the construction according to the invention.

Fig 7 is a section of another further embodiment of the construction according to the invention.

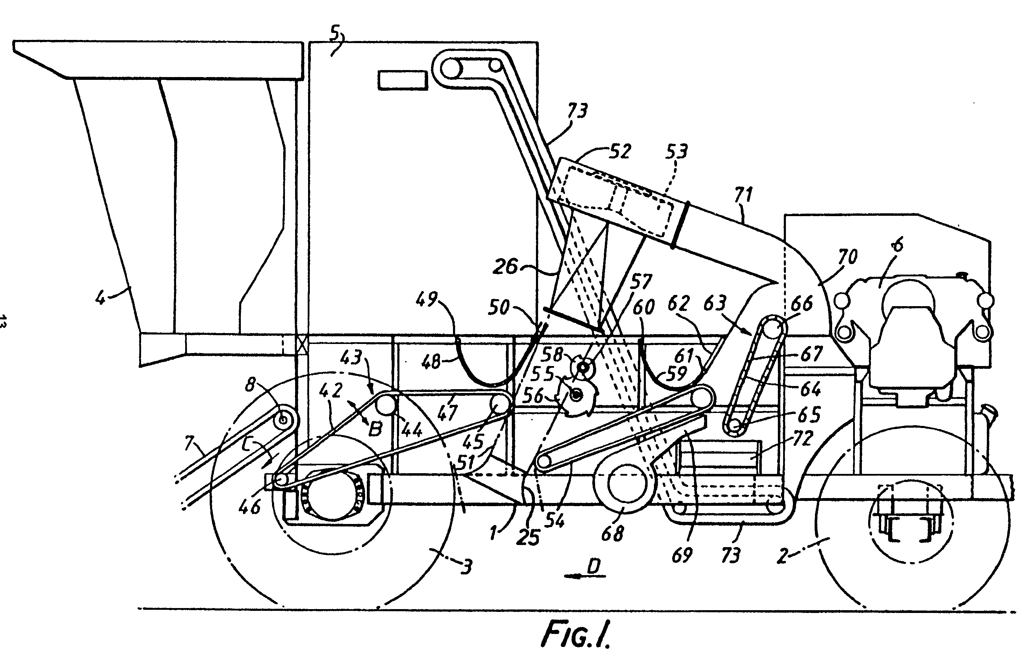

The vehicle illustrated in fig 1 comprises a chassis 1 which is supported in a usual manner by wheels 2 provided on a rear axle and wheels 3 provided on a front axle. At the front side a driver's cabin 4 is mounted on the frame as well as a bunker 5 located therebehind for receiving the harvested pulse crops. An engine 6 for driving the vehicle and the various processing means of the bean picking machine is supported on the rear side of the chassis 1 above the rear wheels 2, so that this source of sound is arranged as far away from the driver as possible, which will substantially contribute to the driver's comfort.

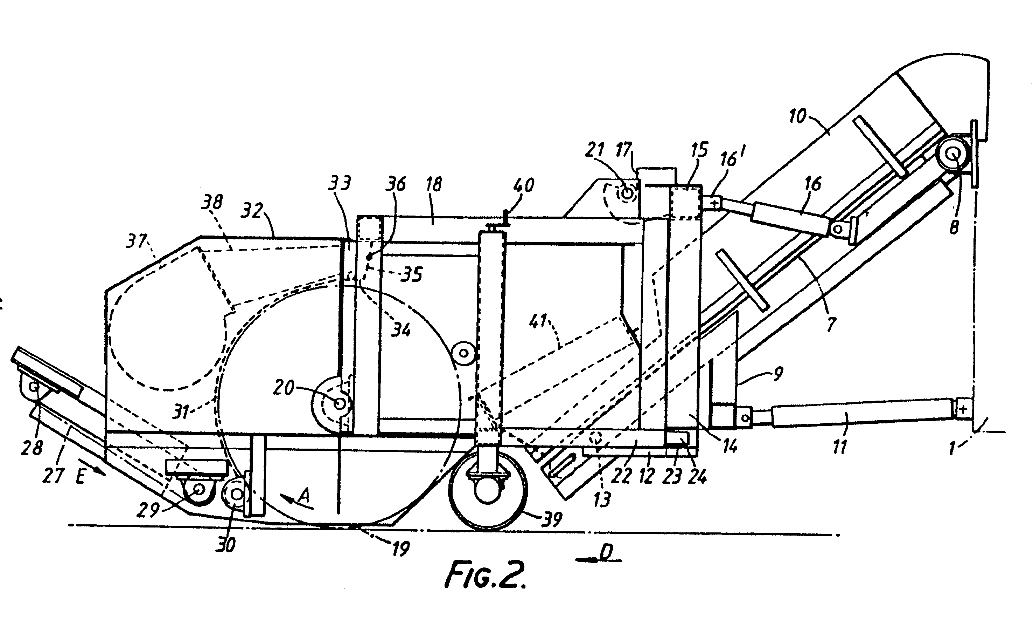

As is furthermore illustrated in fig 1 a belt conveyor 7, only partly illustrated in fig 1, extending obliquely upwardly from its front end, is provided near the front of the vehicle, in such a manner that near its upper end said belt conveyor 7 can pivot relative to the frame about a pivot axis coinciding with the uppermost guide pulley 8 of the belt conveyor 7 and extending horizontally and perpendicularly to the longitudinal direction of the vehicle. The belt conveyor is supported by a frame 9 (fig 2) on which upwardly extending baffles 10 are provided on either side of the belt conveyor 7.

Between the bottom end of the frame 9 and the chassis 1 there is provided at least one hydraulic setting cilinder 11 by means of which the frame 9 supporting the belt conveyor 7 can be pivoted about the pivot axis 8 and be arranged in a desired position as will be described in more detail hereinafter.

On either side of the frame 9, near the bottom end of said frame 9, there are provided a pair of at least substantially horizontally extending frame beams 12 located one behind the, when seen in fig 2, said frame beams being pivotally coupled to the frame 9 near their front ends by means of aligned pivot axes 13.

At the rear ends of said frame beams 12 there are provided frame beams 14 extending at least substantially vertically upwards, whose upper ends are mutually connected by a frame beam 15 extending horizontally and perpendicularly to the longitudinal direction of the vehicle.

Ears 16' are fixed to the frame beam 15. Between the ears 16' and the frame 9 hydraulic setting cilinders 16 are provided on either side of the belt conveyor 7, by means of which the auxiliary frame formed by the frame beams 12,14 and 15 can pivot relative to the frame part 9 supporting the belt conveyor about the pivot axes 13 and by means of which the auxiliary frame can be adjusted into desired positions.

At the front side of the frame beam 15 there is fixed a hook shaped means 17, being open at its upper side.

The device is furthermore provided with a frame 18 supporting a picking drum 19, only diagrammatically illustrated, of a construction known by itself and supported in said frame. Said drum 19 is thereby journalled rotatably in the frame about a horizontal axis 20 and it can be rotated in the direction according to arrow A by means of driving means not further illustrated.

At its upper side the frame 18 is provided with a pin or ball joint 21 which is accommodated in the hook 17.

Near its lower side the frame 18 is provided with a pair of frame parts 22 extending horizontally to the rear and parallel to the frame beams 12, said frame parts butting with their rear ends against rolls 23 fixed to the frame beams 12, said rolls being freely rotatable about axes of rotation 24 whose elongations at least substantially intersect a horizontal line extending through the centre of the hook 17, so that the frame 18 can easily adjust about the imaginary pivot axis formed by said horizontal line. If desired a setting cilinder map be provided between the auxiliary frame formed by the frame beams 12,14 and 15 and the frame 18 by means of which cilinder the frame 18 can be adjusted relative to said auxiliary frame about a vertical pivot axis extending through the coupling point 21, so that for operation the axis of rotation 20 of the picking drum 19 can be adjusted at an angle other than 90° relative to the intended direction of movement.

It will be apparent thereby that, as the ends of the frame parts 22 co-operating with the rolls 23 butt freely against said rolls and the frame 18 is further only connected to said auxiliary frame by means of the hook 17 and the means 21 forming the pin or ball joint, the frame 18 can easily be coupled and uncoupled respectively to/from said auxiliary frame formed by the beams 12,14 and 15 by manipulating the setting cilinders 11 and 16, so that e.g. in case of transport of the vehicle on the road the frame 18 can be uncoupled from the vehicle and transported on the road on a trailer drawn by the vehicle.

In front of the picking drum 19 a retracting belt 27 is provided in the frame, which near its front end is guided around a guide shaft 28 and near its rear end around a guide shaft 29 located lower than the shaft 28. The guide shaft 29 is located near a guide roller 30 journalled in the frame between the guide shaft 29 and the picking drum 19 and extanding parallel to the axis 20 of the drum 19. Near the upper side of the roll 30 there is located the bottom end of a guide plate 31 surrounding the drum along part of its circumference and extending upwardly along the front side of the drum, said guide plate extending approximately as far as the highest point of the drum.

Near this highest point of the drum, between the side walls of a guard 32 protecting the drum and the guide plate 31, there is provided a tubular channel 33 extending substantially parallel to the axis 20. In the bottom wall of said tubular channel there is provided a slitted discharge opening 34. The width of said discharge opening can be regulated by means of a flap 35 extending along the length of the channel 33 which flap can pivot and be adjusted about a pivot axis 36 located near its upper edge, extending parallel to the axis 20. Under the guard 32, in front of the drum 19, a fan 37 is arranged near each side of the guard 32, said fan being drivable in a manner not shown and whose delivery side is connected to an outer end of the channel 32 via a channel 38 also located under the guard 32.

It will be apparent that during operation pressurized air can be supplied to the channel 33 by means of the fans 37, which air will flow outwards in downward direction from the channel 33 and through the drum 19 in the direction of the bottom.

As is furthermore illustrated in fig 2 the frame 18 is provided with a pair of supporting means 39 constructed as ground wheels, which are arranged near the sides of the frame and which can each be vertically adjusted relative to the frame 18 in a manner known by itself by means of a screw spindle 40. The ground wheels 39 are thereby arranged, when seen in side view, between the axis of rotation of the drum and the pivot axes 13 arranged therebehind.

The frame 18 furthermore supports a pair of endless belt conveyors 41 located behind the drum 19 and extending with their longitudinal axes approximately parallel to the axis 20 and by means of which belt conveyors material thrown on the belts 41 by the drum 19 during operation can be transported in the direction of the centre of the frame in order to be delivered there to the belt conveyor 7 extending obliquely upwardly.

As is further illustrated in fig 1 now the upper end of the belt conveyor 7 is located above an obliquely upwardly extending part 42 of an endless belt conveyor 43. Said endless belt conveyor 43 is guided around three guide rollers 44,45 and 46 in such a manner that near the guide roller 44 the obliquely upwardly extending part 42 blends into a horizontally extending part 47 of the belt conveyor 43.

The guide roller 44 is thereby rotatable about an axis of rotation located eccentrically relative to the centre line of the roll 44, so that during operation a reciprocating movement will be communicated to the part 42, as indicated by the double arrow B. As a result of this it is achieved that heavy elements, such as stones,eventually supplied to the belt conveyor 43 by the belt conveyor 7 together with the crop and the like, will be discharged in the direction according to arrow C and will fall on the ground by the shaking movement of said part 42 of the belt conveyor 43.

At the discharge end of the endless belt conveyor 43 located near the guide roller 45 there is arranged a guide plate 48 extending above said belt conveyor 43 along the width of the belt conveyor 43, said guide plate being made of elastic material, e.g. rubber or the like. The guide plate 48 is thereby suspended at one end from a rod 49 extending transversely to the longitudinal direction of the vehicle. From said rod the elastic guide plate extends obliquely rearwardly and downwardly in the direction of the rear end of the horizontal part 47 of the belt conveyor 43 to blend, at a relatively short distance above said horizontally extending part 47, into a part extending obliquely upwardly to the rear. The free end of said part of the guide plate 48 extending obliquely upwardly to the rear is accommodated, movable in its longitudinal direction, between guide plates 50 fixed to the frame.

The discharge end of the belt conveyor 43 located near the guide roller 45 is located near an air channel 25 extending at least along the width of the belt conveyor 43, located under said discharge end and supported by the chassis 1, said air channel being open at the bottom side and the upper side and whose cross-section gradually decreases from below in an upward direction

As appears from fig 1 the channel 25 extending somewhat obliquely upwardly to the rear is located in the extension of a channel 26 arranged higher and gradually increasing in diameter in upward direction, and fixed to a housing 52 in which a fan is accomadated.

During operation air will be sucked in from the channel 26 by means of the fan 53. As a result of this an upward air stream is generated in an imaginary air channel 51 indicated by dashed/dotted lines in fig 1, said channel extending along at least the width of the belt conveyor 43 between the channel 25 and the channel 26. Because of the channel 25, which is adjustable relative to the chassis 1 in order to generate an upward air stream, as rectilinear as possible, from the channel 25 to the channel 26, it appears that the occurrence of turbulent air streams in the imaginary channel 51 is avoided to a large extent, which has an advantageous effect on the intended separation between pulse crops and lighter elements and facilitates adjustment of an optimum airspeed.

Near the rear boundary of the imaginary channel 51 there is located the bottom end of a belt conveyor 54 carried in the chassis and extending obliquely upwardly. Above said belt conveyor a shaft 55 supported by a chassis is journalled to which regularly spaced toothed discs 56 are fixed. Said discs partly protrude into the imaginary channel 51. Above the shaft 55 there is provided a further shaft 57 supported by the chassis 1, said shaft supporting cutting discs 58 located between the discs 56.

Near the discharge end of the belt conveyor 54 there is provided a guide plate 59 corresponding with the guide plate 48, one end of which is fixed to a rod 60 fixed to the chassis and extending transversely to the longitudinal direction of the vehicle. At the other end of the bent guide plate 59 there is fixed a rod 61 extending parallel to the rod 60, said rod 61 being freely movable up-and-down in the ends of guide means 62 supporting the rod 61 and being fixed to the chassis.

Near the discharge end of the endless belt conveyor 54 there is provided an obliquely upwardly extending belt conveyor 63, extending obliquely upwardly to the rear at a considerably steeper angle than the belt conveyor 54. Belt conveyor 63 comprises an endless cloth 64 which is guided around a bottom guide drum 65 and an upper guide drum 66. Fixed to the cloth are pins 67 extending perpendiculary to the cloth.

According to the invention the belt conveyor 63 is adjustable about the centre line of the drum 66 by means of adjusting means, not shown, for a purpose to be described hereinafter.

Under the belt conveyor 54 there is arranged a fan 68 to which a discharge channel 69 is connected. The mouth of the discharge channel 69, which extends at least along the width of the belt conveyor 54, is located near the discharge end of the belt conveyor 54.

The upper end of the belt conveyor 63 is located near a discharge channel 70, which is in communication with the delivery end of the fan 53 via a discharge channel 71.

Under the bottom end of the belt conveyor 63 and the discharge end of the belt conveyor 54 there is arranged a horizontally extending belt conveyor 72, which extends transversely to the longitudinal direction of the vehicle. The discharge end of said belt conveyor 72 is located above the bottom end of a belt conveyor 73 extending obliquely upwardly by means of which material supplied to said belt conveyor 73 can be discharged into the bunker 5.

During operation the vehicle illustrated in fig 1, together with the frame, illustrated in fig 2, which is coupled to the front op the vehicle and the parts supported by said frame, will be moved in the direction according to arrow D. The drum and the various belt conveyors and fans are driven from the motor 6 by means of driving means not shown, such as hydromotors or the like. By vertical adjustment of the ground wheels 39 by means of the spindles 40 and by adjustment of the setting cilinders 11 and 16 the picking drum 19 can be adjusted in such a manner that the teeth of said picking drum 19 move in the lowest position at the desired distance from the ground during operation, whilst at the same time the inclination of retracting belt 27 is as advantageous as possible e.g. in connection with the height of the crops or the like.

As usual the lower part of the retracting belt 27 moves in the direction according to arrow E during operation and the bushes carrying the beans are compressed and taken within reach of the teeth of the picking drum rotating in the direction according to arrow A by means of the belt conveyor, whereby the pulse crops are picked from the bushes in the usual manner and moved upwards and rearwards by the teeth along the guide plate 31.

Not only loose pulse crops are carried along thereby but also leaves and sprigs, whilst the pulse crops are often still connected by sprigs.

The air stream discharged from the gap 34 in the manner already described above blows off downwardly at least part of the light materiel carried along by the teeth of the drum 19, such as loose leaves, so that near the picking drum 19 already a great deal of said light material is separated before the harvested material is supplied to the further parts of the device.

The picked pulse crops and the like land on the belt conveyors 41 and are supplied to the obliquely upwardly extending belt conveyor 7 by means of said belt conveyors. Via the belt conveyor 7 the material is supplied to the part 42 of the belt conveyor 43 moving forward and backward in the direction according to arrow B, where, as already explained above, the separation between particularly heavy elements, such as stones and the remaining part of the material, which is supplied to the interior of the imaginary channel 51 by means of the belt conveyor 43,takes place.

Also because of the rectilinear extension of said channel an effective air stream can be generated in the channel by means of the fan 53 while using relatively little energy. By means of said air stream further light elements, such as leaves, will be separated from the stream of material supplied by the belt conveyor 43 to said channel 51. The pulse crops will be slung from the belt conveyor 43, through the channel 51, on the belt conveyor 54. Pulse crops possibly connected in trusses are caught on the toothing of the discs 56 and are carried upwards by said discs 56 in the direction of the disc cutters 58 which will cut the stems of the trusses, after which the loose pulse crops will fall downwards again on the bottom end of the upwardly extending belt conveyor 54.

Normally it will be possible for the layer of material supplied by the belt conveyor 43 to move just under the flexible guide plate 48, whereby said flexible guide plate 48 prevents an undesired air stream near the discharge end of the belt conveyor 43. If, however, a thick ball of material would be supplied by the belt conveyor 43 the plate 48 can be pressed upwards by said ball of material so that much a ball can still pass without difficulty here.

The same happens when such a ball of material reaches the discharge end of belt conveyor 54 where the flexible guide plate 59 is arranged for opposing undesired air streams.

The pulse crops will fall downward from the discharge end 54 of the belt conveyor on the belt conveyor 72. The lighter elements are blown up by the air stream generated by the fan 68 along the side of the belt conveyor 63 facing the guide plate 59 or carried along upwards by the pins 67 of said belt conveyor to be discharged through the channel 70 together with lighter elements sucked in by means of the fan 53 and discharged via the channel 71.

The conveyor 63 will especially discharge stems discharged by means of the belt conveyor 54 and still present among the pulse crops there. In order to avoid that also pulse crops are taken along by the belt conveyor 63 provided with pins 67 the part of said belt conveyor 63 facing the belt conveyor 54 and moving upwards during operation must extend at a certain angle of inclination. If the inclination is too steep there is a danger that the stems are not taken along either, and if it is too slight there is a danger that pulse crops are taken along. In order to maintain a position as advantageous as possible at all times now, also when driving on sloping terrain, said belt conveyor 63, as already mentioned above, can pivot and be adjusted about the centre line of the uppermost guide drum 66. Preferably means are provided between the chassis 1 and the belt conveyor 63, which automatically pivot the belt conveyor 63 during operation, in proportion to the deviation of the chassis 1 relative to the normal horizontal arrangement. In that case the belt conveyor 63 can assume an optimum position during operation at all times.

Preferably a further fan is arranged near the discharge end of the belt conveyor 72, where the material falls on the bottom end of the belt conveyor 73, so that an air stream directed transversely to the direction in which the material falls can be generated here for discharging any remaining light elements present among the pulse crops to the rear.

As is furthermore diagrammatically illustrated in fig 1 the setting cilinder(s) 11 is (are) fed from the hydraulic main circuit 75, possibly via a reducing valve 76, via a pipe 77 in which a pair of valves 78 and 79 are provided.

The valve 79 can be put in a first position, in which discharge of oil from the cilinder(s) is shut off, so that the cilinder remains in the position set. Said position of the valve 79 is used when the frame 18 supporting the drum 19 is lifted from the ground for transport purposes.

During normal operation the valve 79 is put in its second position, in which the valve does not obstruct the flow of fluid in the pipe 77 in any way.

The valve 78 can be operated manually by the driver for regulating the supply and discharge of pressurized fluid to the setting cilinder(s). The discharge pipe 80 is thereby connected to the valve 78 for the discharge.

During normal operation the valve maintains a certain constant pressure in the setting cilinder(s) 11 at all times, said pressure being adjustable by the driver. Once set the valve will automatically open for the supply of pressurized fluid to the setting cilinder or for the discharge of pressurized fluid from the setting cilinder respectively in order to maintain a constant pressure in the setting cilinder(s). Such a valve is known by itself.

By using such a construction it is guaranteed that a large part of the weight of the frame 18 and the parts supported by said frame is transferred to the chassis 1 by means of the setting cilinder(s) 11, so that only a relatively small part of the frame 18 and the parts belonging thereto is carried by the ground wheels 39. Said ground wheels 39 will easily roll along the surface, therefore, and thereby provide an optimum position of the picking drum 19 and the retracting belt 27 co-operating therewith during operation.

During operation it cannot usually be avoided that also soil and the like impurities land on the belt conveyors in the device. Such impurities tend to move over the surface of the conveyor belts to the sides to wind up between the conveyor belts and the guide pulleys of the belt conveyors, which may lead to serious malfunctions.

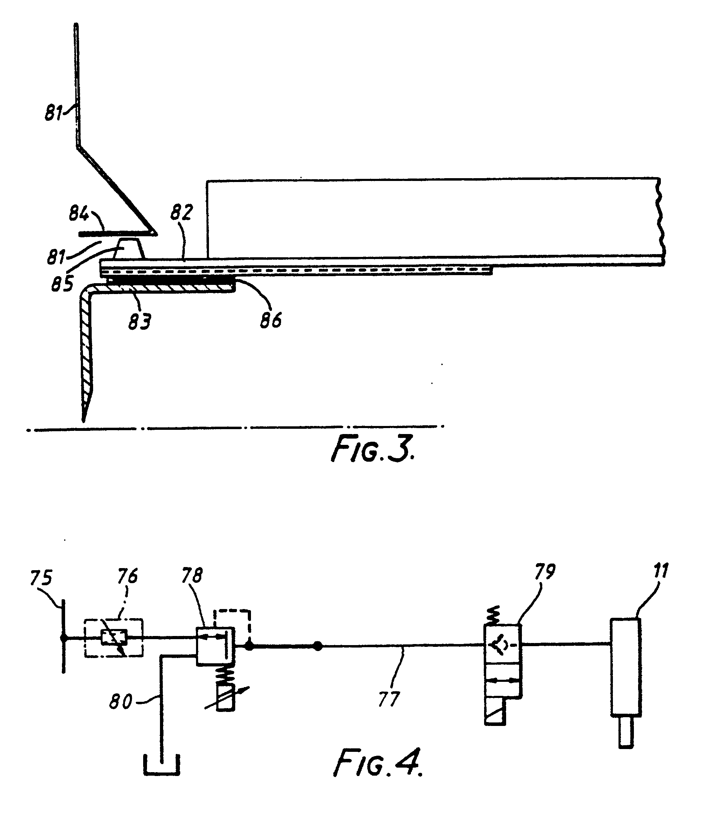

As is illustrated in fig 2 now slots 81 are provided in the side walls 80 of the casing encircling the mechanism described above at least near the upper parts of the belt conveyors, such as the belt conveyors 43 and 54, said slots being bounded by wall parts 83 and 84 joining the side walls and extending perpendicularly to the side walls 80 and parallel to the relevant parts 82 of the belt conveyors. The longitudinal edges of the belt conveyors, on which ribs 85 may be provided to oppose pulse crops falling sideways from the belt conveyors, extend into said slots, as illustrated in fig 3 and slide over a slide strip 86 provided on the wall part 83.

Any dirt such as soil or the like moving over the ribs will now be discharged direct from the interior of the device to the outside via the slot.

Of course variations and/or additions to the constructions described hereinabove will be possible within the spirit and scope of the invention.

Thus fig 5 diagrammatically illustrates an air channel 87 which can be used instead of the belt conveyor 73 for transporting pulse crops supplied by the belt conveyor 72 to the bunker 5. For this purpose a fan 88 is connected to the downstream end of the air channel for generating an air stream in the channel 87 in the direction of the bunker 5. At the upstream side of the fan 88 an air lock 89 is connected to the channel 87, via which pulse crops supplied by the belt conveyor 72 are supplied to the channel 87. By using an air channel 87 for transporting pulse crops to the bunker instead of a belt conveyor there is greater freedom in accommodating this transport part.

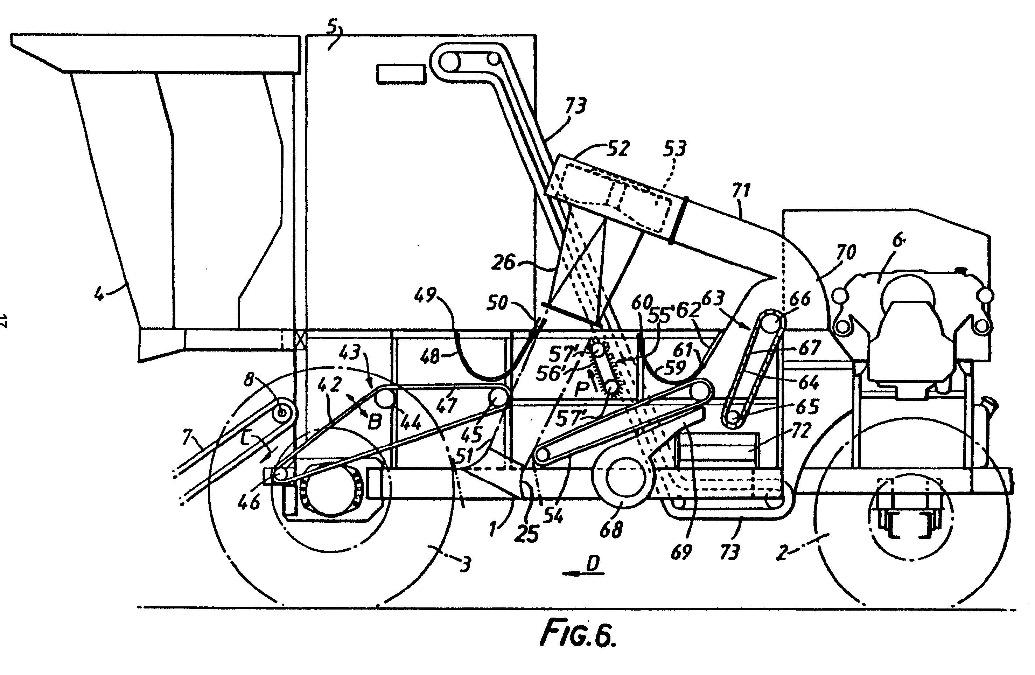

With the embodiment illustrated in fig 6, which substantially corresponds with the embodiment described hereinabove with reference to the figure the bottom end of a belt conveyor 54 supported in the chassis and extending obliquely upwardly is located near the rear boundary of the imaginary channel 51. Above this belt conveyor there is arranged a so-called pin belt 55', having an endless belt supporting protruding pins 56' and being guided around guide rollers 57', at least one of which can be driven during operation so that the belt will move in the direction according to arrow P.

The lower pulley 57' is thereby located at some distance above the upper part of belt conveyor 54, whilst the upper pulley is located neat the lower edge of channel 26. The pin belt then extends obliquely upwardly and forwardly from its lower roller 57' in the direction of the air suction channel 26.

When using this construction any sprigs and the like supplied to the channel which are not directly sucked upwards by the air stream in channel 51, but because of their nature tend to float more or less in the room above the conveyor 54, will get into touch with the pins 56' of the pin belt 55' forming the protruding parts and will be carried upwards by said pins to the mouth of the channel 26 to be sucked along there by the air stream generated by means of the fan 53. Thus an effective discharge also of objects lighter than the pulse crops and heavier than loose foliage is obtained.

Instead of a conveying means formed by a pin belt 55' it will also be possible e.g. to use a belt with carrying means or bars, and possibly also a smooth belt.

Also a conveying means in the form of a reel will be conceivable.

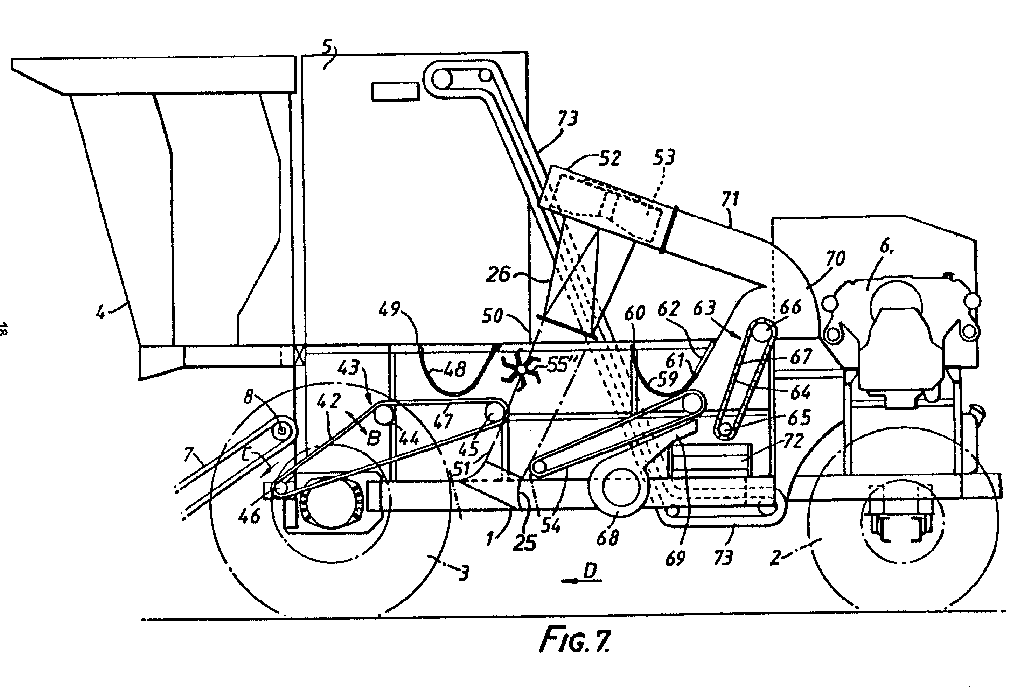

Thus fig 7 shows an embodiment in which use has been made of a reel 55'' as a conveying means, said reel being provided with protruding teeth or carriers. The reel is driven in such a manner during operation that the teeth of said reel catch crop parts floating in the air channel and throw them upwards in the air channel.

In the embodiment illustrated in fig 7 the reel is arranged in front of the air channel, for which purpose the guide plate has also been placed to the front relative to the arrangement illustrated in fig 1. It will be obvious, however, that an arrangement at the other side of the air channel will be conceivable too.

## Claims

1. Device for picking pulse crops, provided with a frame, with a picking drum (19) provided with teeth, supported by the frame (18) and being rotatable about an at least substantially horizontal axis of rotation (20) extending transverse to the intended direction of movement (D) during operation and with a guide plate (32) co-operating therewith and extending around and at a distance from the drum and with means (37) for creating a flow of air towards the drum (19), characterised in that said means (37) for creating a flow of air co-operate with guide means (33-36) provided above and exending along the upper side of the drum (19) and which means (33-36) guide the flow of air in downward direction through the drum (19) towards the ground.

2. Device according to claim 1, characterised in that near the upper side of the drum (19) there is provided a channel (33) extending substantially parallel to the axis of rotation (20) of the drum (19), said channel being provided with a discharge passage (34) at the bottom side.

3. Device according to claim 2, characterised in that means (35) are provided by means of which the width of the discharge passage (34) can be regulated.

4. Device according any of the preceding claims 2 or 3, characterised that near each end of the channel (33) a fan (37) is connected to the channel.

5. Device according to claim 4, characterised in that near each end of the drum (19) a fan (37) is arranged in front of the drum.

6. Device according any of the preceding claims characterised in that the frame (18) supporting the drum (19) has been coupled to the front of a vehicle (1-3) and a retracting belt (27), supported by the frame (18), extends obliquely upwardly and forwardly from its lower end located near the circumference of the drum (19), the frame being supported on the ground during operation by supporting means (39) which are vertically adjustable relative to the frame (18) whilst the frame (18) is adjustable relative to the vehicle (1-3) about a pivot axis (13) extending transversely to the intended direction of movement during operation.

7. Device as claimed in any preceding claim, characterised in that the frame (18) supporting the drum (19) is provided with a pair of rearwardly extending frame parts (22) freely butting with their rear ends against parts (23) of the chassis of the vehicle (1-3), whilst at some distance above the rearwardly extending frame parts (22) the frame (18) is coupled to a setting cilinder (16) coupled to the chassis of the vehicle by means of a pin or ball and hook joint.

8. Device according to any of the preceding claims, characterised in that between the frame (18) supporting the drum (19) and the vehicle (1-3) there is provided at least one setting cilinder (11), which is connected to a source of a pressurized fluid (75) via a pipe (77) in which a valve mechanism (78, 79) is provided, said mechanism maintaining during operation the pressure in the setting cilinder at a certain value, adjustable in the valve mechanism.

9. Device according to claim 8, characterised in that the setting cilinder(s) (11) is (are) provided between a frame part (9) pivotally coupled to the chassis (1) of the vehicle and supporting a belt conveyor (7), and the chassis (1) of the vehicle, whilst the frame (18) supporting the drum (19) is coupled to a further frame part (12, 14, 15), which near its bottom end is pivotally (13) coupled to the frame part (9) supporting the belt conveyor (7), whilst between said further frame part (12, 14, 15) and the frame part (9) supporting the belt conveyor (7) there is provided at least one setting cilinder (16).

10. Device according to any of the preceding claims, characterised in that near the front side of the device there is provided a belt conveyor (43) which is guided about guide rollers (44-46), in such a manner that the upper part of the belt has a part (42) extending obliquely upwardly to the rear, whilst at least one (44) of the guide rollers (44, 46) between which said part extends is rotatable about an axis of rotation located eccentrically relative to the centre line of said guide rollers (44).

11. Device according to any of the preceding claims, characterised in that the device is provided with an air channel (25) extending obliquely upwardly to the rear, said channel being open at the bottom side and the upper side and whose section gradually decreases in upward direction, whilst at some distance above and in the extension of said channel (25) there is arranged a further channel (26) to whose upper end a fan (53) is connected in such a manner that between said channels (25, 26) an imaginary channel (51) is formed during operation at one side of which there is loacted the discharge end of a belt conveyor (43) and at the other side of which there is located the front part of an other belt conveyor (54) located lower than said discharge end.

12. Device according to claim 11, characterised in that near the imaginary air channel (51) there is arranged a transport means by means (55-58; 55', 55'') of which crop parts present in the imaginary air channel (51) can be displaced in the direction of the further channel (26) during operation.

13. Device according to claim 12, characterised in that the transport means is formed by an upwardly extending endless belt (55'), which is arranged above the further belt conveyor (54) and whose upper end is located near the bottom end of the further channel (26).

14. Device according to claim 13, characterised in that the endless belt (55') forming the transport means is provided with carriers (56').

15. Device according to claim 14, characterised in that the carriers (56') are formed by pins which are fixed to an endless belt (55').

16. Device according to any of the claims 13-15, characterised in that the belt conveyor (55') forming the transport means extends obliquely downwardly from its upper end in a direction facing away form the belt conveyor (43) supplying the material to the imaginary air channel (51).

17. Device according to any of the preceding claims 12-16, characterised in that the belt conveyor (55') forming the transport means is located at least substantially entirely at the side of the air imaginary channel (55) facing away from the belt conveyor (43) supplying material to said imaginary air channel.

18. Device according to claim 12, characterised in that the transport means is formed by a reel (55'') rotating during operation.

19. Device according to any of the claims 11-18, characterised in that near the discharge ends of the belt conveyors (43, 54) there are provided flexible baffles (48, 59) which are located with their lower ends at a short distance above the relevant belt conveyors.

20. Device according to claim 19, characterised in that the baffles (48, 59) have a curved section, such that the ends of the baffles are located lower than the parts located therebetween, whilst the ends (50, 61) of the baffles located downstreams are supported movably in their longitudinal direction.

21. Device according to any of the claims 11-20, characterised in that under the conveyor (54) arranged downstreams of the imaginary air channel (51) there is provided a further air channel (64) being in communication with a fan (68), said air channel (69) debouching near the discharge end of said conveyor.

22. Device according to any of the claims 11-21, characterised in that opposite the discharge end of the conveyor (54) arranged downstream of the imaginary air channel (51) there is provided a belt conveyor (63) provided with protruding pins (67), said belt conveyor (63) being adjustable about a pivot axis (66) located near its upper end.

23. Device according to claim 22, characterised in that means are provided for automatically pivoting the belt conveyor (63) about its pivot axis (66), proportional to the alterations of the positions of the vehicle in deviation from the normal horizontal position of the vehicle, such that the position of the part of the belt conveyor moving upwards remains at least substantially equal relative to the horizontal.

24. Device according to clais 22 or 23, characterised that the discharge end of the belt conveyor (63) debouches into a discharge channel (70) to whose upper end there is connected a discharge end of the fan (53) forming the imaginary air channel (51) during operation.

25. Device according to any of the claims 22-24, characterised in that under the belt conveyor (63) there is located a belt conveyor (72) extending transversely to the longitudinal direction of the vehicle, whose discharge end is located above the bottom end of an oblique upwardly extending conveyor (73), whose upper end debouches into a bunker (5), whilst near the discharge end of the belt conveyor (72) extending transversely to the longitudinal direction means (68, 69) are provided for forming an air stream directed transversely to the stream of material falling from the belt conveyor (54).

26. Device according to any of the preceding claims, characterised in that for the supply of the picked pulse crops to a bunker (5) provided on the chassis(1) of the vehicle use is made of an air channel (87) in which an air stream is generated by means of a fan (88) during operation for displacing the pulse crops through the air channel to the bunker.

27. Device according to any of the claims 9 to 26, characterised in that the longitudinal edges (82) of at least the upper part of a conveyor incorporated in the device extend into slots (81) which are provided in walls (81) of a casing surrounding the parts of the device.

**Patentansprüche**

1. Pflückvorrichtung für Hülsenfrüchte mit einem Rahmen, mit einer mit Zähnen versehenen Pflücktrommel (19), die vom Rahmen (18) getragen wird, und die um eine mindestens im wesentlichen horizontale Rotationsachse (20) drehbar ist, die sich während des Betriebs quer zur vorgesehenen Bewegungsrichtung (D) erstreckt, und mit einer Führungsplatte (32), die mit der Trommel (19) zusammenwirkt und sich um sie herum in einer Distanz von der Trommel erstreckt,und mit Mittel (37) zur Erzeugung eines Luftstroms zur Trommel (19), dadurch **gekennzeichnet,** daß die Mittel (37) zur Herstellung eines Luftstroms mit Führungsmitteln (33-36) zusammenwirken,die über der Oberseite der Trommel (19) vorgesehen und sich entlang der Oberseite der Trommel (19) erstrecken, und welche Mittel (33-36) den Luftstrom in abwärtige Richtung durch die Trommel (19) zum Boden leiten.

2. Vorrichtung nach Anspruch 1, dadurch **gekennzeichnet**, daß nahe der Oberseite der Trommel (19) ein Kanal (33) vorgesehen ist, der sich im wesentlichen parallel zur Rotationsachse (20) der Trommel (19) erstreckt, wobei der Kanal an der Unterseite mit einem Auslassdurchlass (34) versehen ist.

3. Vorrichtung nach Anspruch 2, dadurch **gekennzeichnet**, daß die Mittel (35) mit Mitteln versehen sind, mit denen die Breite des Auslassdurchlasses (34) reguliert werden kann.

4. Vorrichtung nach einem der vorhergehenden Ansprüche 2 oder 3, dadurch **gekennzeichnet**, daß in der Nähe jedes Endes des Kanals (33) ein Gebläse (37) mit dem Kanal verbunden ist.

5. Vorrichtung nach Anspruch 4, dadurch **gekennzeichnet**, daß in der Nähe jedes Endes der Trommel (19) ein Gebläse (37) vor der Trommel angeordnet ist.

6. Vorrichtung nach einem der vorhergehenden Ansprüche, dadurch **gekennnzeichnet**, daß der Rahmen (18), der die Trommel (19) trägt, mit der Vorderseite eines Fahrzeugs (1-3) verbunden wurde, und ein Retraktionsband (27), das durch den Rahmen (18) getragen wird, sich von seinem unteren Ende in der Nähe des Umfangs der Trommel (19) schräg nach oben und vorwärts erstreckt, und daß der Rahmen während des Betriebs von Tragmitteln (39) auf dem Boden abgestützt wird, welche relativ zu dem Rahmen (18) vertikal einstellbar sind, während der Rahmen (18) relativ zu dem Fahrzeug (1-3) um eine Drehachse (13) einstellbar ist, welche sich quer zur vorgesehenen Bewegungsrichtung während des Betriebs erstreckt.

7. Vorrichtung nach einem der vorhergehenden Ansprüche, dadurch **gekennzeichnet**, daß der Rahmen (18), der die Trommel (19) trägt, mit einem Paar sich rückwärts erstreckender Rahmenteile (22) versehen ist, die mit ihren Rückenden frei gegen Teile (23) des Chassis des Fahrzeugs (1-3) stossen, während in einiger Entfernung über den rückwärts erstreckenden Rahmenteilen (22) der Rahmen (18) mit einem Einstellzylinder (16) verbunden ist, der mit einem Stift oder einer Kugel und einer Hakenverbindung mit dem Chassis des Fahrzeugs verbunden ist.

8. Vorrichtung nach einem der vorhergehenden Ansprüche, dadurch **gekennzeichnet**, daß zwischen dem Rahmen (18), der die Trommel (19) trägt, und dem Fahrzeug (1-3) wenigstens ein Einstellzylinder (11) vorgesehen ist, der über ein Rohr (77), in welchem ein Ventilmechanismus (78,79) vorgesehen ist, mit einer Quelle unter Druck stehendem Fluids (75) verbunden ist, wobei besagter Mechanismus während des Betriebs den mit dem Ventilmechanismus einstellbaren Druck in dem Einstellzylinder auf einem bestimmten Wert hält.

9. Vorrichtung nach Anspruch 8, dadurch **gekennzeichnet**, daß der/die Einstellzylinder (11) zwischen einem Rahmenteil (9), das drehbar mit dem Fahrzeugchassis (1) verbunden ist und ein Förderband (7) trägt, und dem Fahrzeugchassis (1) vorgesehen ist (sind), während der Rahmen (18), der die Trommel (19) trägt, mit einem weiteren Rahmenteil (12,14,15) verbunden ist, welches in der Nähe seines Bodenendes drehbar (13) mit dem Rahmenteil (9) verbunden ist, der das Förderband (7) trägt, während zwischen dem weiteren Rahmenteil (12,14,15) und dem Rahmenteil (9), der das Förderband (7) trägt, wenigstens ein Einstellzylinder (16) vorgesehen ist.

10. Vorrichtung nach einem der vorhergehenden Ansprüche, dadurch **gekennzeichnet**, daß in der Nähe der Frontseite der Vorrichtung ein Förderband (43) angeordnet ist, welches über Führungsrollen (44-46) in einer solchen Weise geführt wird, daß der obere Teil des Bandes ein Teil (42) aufweist, das sich schräg nach oben hinten erstreckt, während wenigstens eine (44) der Führungsrollen (44,46) zwischen denen sich der besagte Teil erstreckt, um eine Rotationsachse drehbar ist, die exzentrisch relativ zur Mittellinie der Führungsrollen (44) angeordnet ist.

11. Vorrichtung nach einem der vorhergehenden Ansprüche, dadurch **gekennzeichnet**, daß die Vorrichtung mit einem Luftkanal (25) versehen ist, der sichschräg nach oben hinten erstreckt, wobei der Kanal an der Unterseite und der Oberseite offen ist, und dessen Querschnitt sich in aufwärtiger Richtung allmählich vermindert, während in einiger Distanz oberhalb und in der Verlängerung des Kanals (25) ein weiterer Kanal (26) angeordnet ist, mit dessen oberen Ende ein Gebläse (53) in einer solchen Weise verbunden ist, daß im Betrieb zwischen den Kanälen (25,26) ein imaginärer Kanal (51) gebildet ist, an dessen einer Seite das Entladungsende eines Förderbandes (43) angeordnet ist, und an dessen anderer Seite das Frontteil eines anderen Förderbandes (54) unterhalb des genannten Entladungsende angeordnet ist.

12. Vorrichtung nach Anspruch 11, dadurch **gekennzeichnet**, daß in der Nähe des imaginären Luftkanals (51) ein Transportmittel (55-58; 55', 55") angeordnet ist, mit dem in dem imaginären Luftkanal (51) enthaltene Ernteteile während des Betriebs in Richtung des weiteren Kanals (26) verlagert werden können.

13. Vorrichtung nach Anspruch 12, dadurch **gekennzeichnet**, daß das Transportmittel durch ein aufwärts erstreckendes Endlosband (55') gebildet ist, welches über dem weiteren Förderband (54) angeordnet ist, und dessen oberes Ende in der Nähe des unteren Endes des weiteren Kanals (26) angeordnet ist.

14. Vorrichtung nach Anspruch 13, dadurch **gekennzeichnet**, daß das Endlosband (55'), welches das Transportmittel bildet, mit Trägern (56') versehen ist.

15. Vorrichtung nach Anspruch 14, dadurch **gekennzeichnet**, daß die Träger (56') durch Dorne gebildet werden, die an dem Endlosband (55') befestigt sind.

16. Vorrichtung nach einem der Ansprüche 13 bis 15, dadurch **gekennzeichnet**, daß das Förderband (55'), welches das Transportmittel bildet, sich von seinem oberen Ende schräg nach unten in eine Richtung erstreckt, die von dem Förderband (43) wegzeigt, welches Material dem imaginären Luftkanal (51) zuführt.

17. Vorrichtung nach einem der vorhergehenden Ansprüche 12 bis 16, dadurch **gekennzeichnet**, daß das Förderband (55'), welches das Transportmittel bildet, mindestens im wesentlichen vollständig an der Seite des imaginären Luftkanals (51) angeordnet ist, die von dem Förderband (43) wegzeigt,und Material dem imaginären Luftkanal zuführt.

18. Vorrichtung nach Anspruch 12, dadurch **gekennzeichnet**, daß das Transportmittel durch eine Haspel (55") gebildet ist, die während des Betriebs rotiert.

19. Vorrichtung nach einem der Ansprüche 11 bis 18, dadurch **gekennzeichnet**, daß in der Nähe der Entladungsenden der Förderbänder (43,54) flexible Prallflächen (48,59) vorgesehen sind, die mit ihren unteren Enden eine kurze Distanz über den relevanten Förderbändern angeordnet sind.

20. Vorrichtung nach Anspruch 19, dadurch **gekennzeichnet**, daß die Prallflächen (48,59) einen gekrümmten Abschnitt aufweisen, so daß die Enden der Prallflächen tiefer als die Teile dazwischen angeordnet sind, während die Enden (50,61) der Prallflächen, die stromabwärts angeordnet sind, in ihrer Längsrichtung beweglich gelagert sind.

21. Vorrichtung nach einem der Ansprüche 11 bis 20, dadurch **gekennzeichnet**, daß unter dem Förderer (54) stromabwärts des imaginären Luftkanals (51) ein weiterer Luftkanal (64) vorgesehen ist, der mit einem Gebläse (68) in Verbindung steht, wobei der Luftkanal (69) in der Nähe des Entladungsendes des genannten Förderers einmündet.

22. Vorrichtung nach einem der Ansprüche 11 bis 21, dadurch **gekennzeichnet**, daß gegenüber dem Entladungsende des Förderers (54) stromabwärts des imaginären Luftkanals (51) ein Förderband (63) vorgesehen ist, das mit vorstehenden Stiften (67) versehen ist, wobei das Förderband (63) um eine Drehachse (66), die in der Nähe seines oberen Endes angeordnet ist, einstellbar ist.

23. Vorrichtung nach Anspruch 22, dadurch **gekennzeichnet**, daß Mittel vorgesehen sind, zur automatischen Drehung des Förderbands (63) um seine Drehachse (66) proportional zu den Positionsänderungen des Fahrzeugs in Abweichung von der normalen horizontalen Position des Fahrzeugs, so daß die Position des Förderbandteils, der sich aufwärts bewegt, mindestens im wesentlichen relativ zur Horizontalen gleich bleibt.

24. Vorrichtung nach Anspruch 22 oder 23, durch **gekennzeichnet**, daß das Entladungsende des Förderbandes (63) in einen Entladungskanal (70) mündet, dessen oberes Ende mit dem Auslaßende des Gebläses (53) verbunden ist, welches im Betrieb den imaginären Luftkanal (51) bildet.

25. Vorrichtung nach einem der Ansprüche 22 bis 24, dadurch **gekennzeichnet**, daß unter dem Förderband (63) ein Förderband (72) angeordnet ist, das sich quer zur Längsrichtung des Fahrzeugs erstreckt, dessen Entladungsende über dem unteren Ende eines schräg aufwärts erstreckenden Förderers (73) angeordnet ist, dessen oberes Ende in einen Bunker (5) einmündet, während in der Nähe des Entladungsendes des Förderbandes (72), das sich quer zu der Längsrichtung erstreckt, Mittel (68,69) vorgesehen sind zur Erzeugung einer Luftströmung, die quer zum Strom des Materials gerichtet ist, das vom Förderband (54) fällt.

26. Vorrichtung nach einem der vorhergehenden Ansprüche, dadurch **gekennzeichnet**, daß zur Zufuhr von gepflückten Hülsenfrüchten in einen Bunker (5), der auf dem Chassis (1) des Fahrzeugs angeordnet ist, von einem Luftkanal (87) Gebrauch gemacht wird, in welchem während des Betriebs ein Luftstrom mittels eines Gebläses (88) erzeugt wird, zur Verlagerung der Hülsenfrüchte durch den Luftkanal in den Bunker.

27. Vorrichtung nach einem der Ansprüche 9 bis 26, dadurch **gekennzeichnet**, daß die Längskanten (82) wenigstens des Oberteils eines in der Vorrichtung enthaltenen Förderers sich in Schlitze (81) erstreckt, welche in Wänden (81) eines Gehäuses, welches die Teile der Vorrichtung umgibt, angeordnet sind.

**Revendications**

1. Dispositif de cueillette de légumineuses, pourvu d'un bâti, d'un tambour de cueillette (19) pourvu de dents, supporté par le bâti (18) et pouvant tourner autour de au moins un axe de rotation substantiellement horizontal (20) s'étendant transversalement au sens prévu de déplacement (D) en cours de fonctionnement et d'une plaque de guidage (32) coopérant avec celui-ci et s'étendant autour de et à une distance du tambour et de moyens (37) destinés à créer un courant d'air en direction du tambour (19), caractérisé en ce que les dits moyens (37) destinés à créer un courant d'air coopèrent avec des moyens de guidage (33 à 36) prévus au-dessus de et s'étendant le long du côté supérieur du tambour (19) et lesquels (33 à 36) guident le courant d'air vers le bas au travers du tambour (19) en direction du sol.

2. Dispositif selon la revendication 1, caractérisé en ce que, à proximité du côté supérieur du tambour (19), est prévu un conduit (33) s'étendant substantiellement parallèlement à l'axe de rotation (20) du tambour (19), le dit conduit étant pourvu d'un passage de sortie (34) sur le côté inférieur.

3. Dispositif selon la revendication 2, caractérisé en ce que des moyens (35) sont prévus grâce auxquels la largeur du passage de sortie (34) peut être régulée.

4. Dispositif selon l'une quelconque des revendications précédentes 2 ou 3, caractérisé en ce que, à proximité de chaque extrémité du conduit (33), est relié au conduit un ventilateur (37).

5. Dispositif selon la revendication 4, caractérisé en ce que, à proximité de chaque extrémité du tambour (19), est disposé un ventilateur (37) à l'avant du tambour.

6. Dispositif selon l'une quelconque des revendications précédentes, caractérisé en ce que le bâti (18) supportant le tambour (19) est relié à l'avant du véhicule (1 à 3) et une courroie escamotable (27), supportée par le bâti (18), s'étend en oblique vers le haut et vers l'avant depuis son extrémité inférieure située à proximité de la circonférence du tambour (19), le bâti étant supporté sur le sol en fonctionnement par des moyens de support (39) qui sont réglables verticalement par rapport au bâti (18) alors que le bâti (18) est réglable par rapport au véhicule (1 à 3) autour d'un axe de pivotement (13) s'étendant transversalement au sens prévu de déplacement en cours de fonctionnement.

7. Dispositif selon l'une quelconque des revendications précédentes, caractérisé en ce que le bâti (18) supportant le tambour (19) est pourvu d'une paire de parties de bâti s'étendant vers l'arrière (22) buttant librement avec leurs extrémités arrières contre des parties (23) du châssis du véhicule (1 à 3), alors que à une certaine distance au-dessus des parties de bâti s'étendant vers l'arrière (22), le bâti (18) est couplé à un vérin de réglage (16) relié au châssis du véhicule au moyen d'une articulation à rotule ou à crochet.

8. Dispositif selon l'une quelconque des revendications précédentes, caractérisé en ce que, entre le bâti (18) supportant le tambour (19) et le véhicule (1 à 3), est prévu au moins un vérin de réglage (11), qui est relié à une source de fluide sous pression (75) par l'intermédiaire d'une conduite (77) dans laquelle un mécanisme à soupape (78, 79) est prévu, le dit mécanisme maintenant en cours de fonctionnement la pression dans le vérin de réglage à une certaine valeur, réglable dans le mécanisme à soupape.

9. Dispositif selon la revendication 8, caractérisé en ce que le ou les vérins de réglage (11) sont prévus entre une partie de bâti (9) reliée de façon pivotante au châssis (1) du véhicule et supportant un transporteur à bande (7), et le châssis (1) du véhicule, alors que le bâti (18) supportant le tambour (19) est couplé à une autre partie de bâti (12, 14, 15), qui à proximité de son extrémité inférieure est reliée de façon pivotante (13) à la partie de bâti (9) supportant le transporteur à bande (7), alors que entre la dite autre partie de bâti (12, 14, 15) et la partie de bâti (9) supportant le transporteur à bande (7) est prévu au moins un vérin de réglage (16).

10. Dispositif selon l'une quelconque des revendications précédentes, caractérisé en ce que, à proximité du côté avant du dispositif, est prévu un transporteur à bande (43) qui est guidé autour de rouleaux de guidage (44 à 46) d'une manière telle que la partie supérieure de la bande possède une partie (42) s'étendant en oblique vers haut et vers le l'arrière, alors que au moins un (44) des rouleaux de guidage (44, 46) entre lesquels la dite partie s'étend peut tourner autour d'un axe de rotation disposé de façon excentré par rapport à l'axe des dits rouleaux de guidage (44).

11. Dispositif selon l'une quelconque des revendications précédentes, caractérisé en ce que le dispositif est pourvu d'un conduit d'air (25) s'étendant en oblique vers le haut et vers l'arrière, le dit conduit étant ouvert sur le côté inférieur et le côté supérieur et dont la section diminue progressivement vers le haut, alors que à une certaine distance au dessus de et dans le prolongement du dit conduit (25) est disposé un autre conduit (26) à l'extrémité supérieur duquel est relié un ventilateur (53) d'une manière telle que, entre les dits canaux (25, 26), est formé en cours de fonctionnement un conduit imaginaire (51) sur un côté duquel est disposé l'extrémité de sortie d'un transporteur à bande (43) et sur l'autre côté duquel est disposé la partie avant d'un autre transporteur à bande (54) situé plus bas que la dite extrémité de sortie.

12. Dispositif selon la revendication 11, caractérisé en ce que, à proximité du conduit d'air imaginaire (51), est disposé un moyen de transport (55 à 58; 55′, 55″) au moyen duquel des parties de la récolte présentes dans le conduit d'air imaginaire (51) peuvent être déplacées en direction de l'autre conduit (26) en cours de fonctionnement.

13. Dispositif selon la revendication 12, caractérisé en ce que le moyen de transport est formé par une bande sans fin s'étendant vers le haut (55′), qui est disposée au-dessus de l'autre transporteur à bande (54) et dont l'extrémité supérieure est disposée à proximité de l'extrémité inférieure de l'autre conduit (26).

14. Dispositif selon la revendication 13, caractérisé en ce que la bande sans fin (55′) formant le moyen de transport est pourvue de porteur-charges (56′).

15. Dispositif selon la revendication 14, caractérisé en ce que les porteur-charges (56′) sont formés par des axes qui sont fixés à une bande sans fin (55′).

16. Dispositif selon l'une quelconque des revendication 13 à 15, caractérisé en ce que le transporteur à bande (55′) formant le moyen de transport s'étend en oblique vers le bas depuis son extrémité supérieure dans une direction s'écartant du transporteur à bande (43) emmenant la matière vers le conduit d'air imaginaire (51).

17. Dispositif selon l'une quelconque des revendications précédentes 12 à 16, caractérisé en ce que le transporteur à bande (55') formant le moyen de transport est disposé au moins substantiellement entièrement sur le côté du conduit d'air imaginaire (55) s'écartant du transporteur à bande (43) emmenant la matière vers le dit conduit d'air imaginaire.

18. Dispositif selon la revendication 12, caractérisé en ce que le moyen de transport est formé par une roue (55″) tournant en fonctionnement.

19. Dispositif selon l'une quelconque des revendications 11 à 18, caractérisé en ce que, à proximité des extrémités de sortie des transporteurs à bande (43, 54), sont prévues des déflecteurs flexibles (48, 59) qui sont disposés à leurs extrémités inférieures à une courte distance au-dessus des transporteurs à bande concernés.

20. Dispositif selon la revendication 19, caractérisé en ce que les déflecteurs (48, 59) ont une section courbe, de telle sorte que les extrémités des déflecteurs sont disposées plus bas que les parties disposées entre eux, alors que les extrémités (50, 61) des déflecteurs disposés en aval sont supportées de façon mobile dans leur direction longitudinale.

21. Dispositif selon l'une quelconque des revendications 11 à 20, caractérisé en ce que, sous le transporteur (54) disposé en aval du conduit d'air imaginaire (51), est prévu un autre conduit d'air (64) qui est en communication avec un ventilateur (68), le dit conduit d'air (69) débouchant à proximité de l'extrémité de sortie du dit transporteur.

22. Dispositif selon l'une quelconque des revendications 11 à 21, caractérisé en ce que, à l'opposé de l'extrémité de sortie du transporteur (54) disposé en aval du conduit d'air imaginaire (51), est prévu un transporteur à bande (63) pourvu d'axes saillants (67), le dit transporteur à bande (63) étant réglable autour d'un axe de pivotement (66) disposé à proximité de son extrémité supérieure.

23. Dispositif selon la revendication 22, caractérisé en ce que des moyens sont prévus pour faire pivoter automatiquement le transporteur à bande (63) autour de son axe de pivotement (66), proportionnellement aux variations de positions du véhicule par rapport à la position horizontale normale du véhicule, de telle sorte que la position de la partie du transporteur à bande se déplaçant vers le haut reste au moins substantiellement égale par rapport à l'horizontale.

24. Dispositif selon les revendications 22 ou 23, caractérisé en ce que l'extrémité de sortie du transporteur à bande (63) débouche dans un conduit de sortie (70) à l'extrémité supérieure duquel est relié une extrémité de sortie du ventilateur (53) formant le conduit d'air imaginaire (51) en cours de fonctionnement.

25. Dispositif selon l'une quelconque des revendications 22 à 24, caractérisé en ce que, sous le transporteur à bande (63), est disposé un transporteur à bande (72) s'étendant transversalement à la direction longitudinale du véhicule, dont l'extrémité de sortie est disposée au-dessus de l'extrémité inférieure d'un transporteur à bande (73) s'étendant en oblique vers le haut, dont l'extrémité supérieure débouche dans une trémie (5), alors que à proximité de l'extrémité de sortie du transporteur à bande (72) s'étendant transversalement à la direction longitudinale sont prévus des moyens (68, 69) destinés à former un courant d'air dirigé transversalement au courant de matière tombant du transporteur à bande (54).

26. Dispositif selon l'une quelconque des revendications précédentes, caractérisé en ce que, pour l'alimentation des légumineuses cueillies vers une trémie (5) prévue sur le châssis (1) du véhicule, il est fait usage d'un conduit d'air (87) dans lequel un courant d'air est généré au moyen d'un ventilateur (88) en cours de fonctionnement afin de déplacer les légumineuses au travers du conduit d'air en direction de la trémie.

27. Dispositif selon l'une quelconque des revendications 9 à 26, caractérisé en ce que les bords longitudinaux (82) de au moins la partie supérieure d'un transporteur incorporé dans le dispositif s'étendent dans des fentes (81) qui sont prévues dans des parois (81) d'un capotage entourant les parties du dispositif.

Fig.I.

Fig.2.

FIG.3.

FIG.4.

*Fig. 5.*

**FIG.6.**

EP 0 246 697 B1

FIG.7.